# EUROPÄISCHE PATENTSCHRIFT

(11) **EP 2 862 697 B1**
(45) Veröffentlichungstag und Bekanntmachung des Hinweises auf die Patenterteilung: **21.02.2018**
(21) Anmeldenummer: 14181042.4
(22) Anmeldetag: 14.08.2014
(51) Int. Cl.: B29C 65/18, B29C 65/24, B29C 65/74

(54) **Siegelvorrichtung mit mehreren Laserstrahlen**
Seal device with multiple laser beams
Dispositif de scellement à plusieurs rayons laser

(30) Priorität: 21.10.2013 DE 102013221280
(43) Veröffentlichungstag der Anmeldung: 22.04.2015
(73) Patentinhaber: Rovema GmbH, 35463 Fernwald-Annerod (DE)
(72) Erfinder: Braun, Harald, 35305 Grünberg (DE)
(74) Vertreter: advotec.

(56) Entgegenhaltungen:
- DE-A1- 19 746 402
- JP-A- H08 192 825

## Beschreibung

Die Erfindung betrifft eine Siegelvorrichtung zum Verschweißen zweier überlappender Folienabschnitte mit einer Schweißbacke, welche ein von einem Laserstrahl beheizbares Heizelement umfasst, gemäß dem Oberbegriff des Anspruchs 1.

Aus dem Stand der Technik sind verschiedene Siegelvorrichtungen zum Verschweißen von überlappenden Folienabschnitten bekannt. Grundsätzlich bedarf es der Einbringung der erforderlichen Wärme zum An- bzw. Aufschmelzen der zu verbindenden Folienabschnitte im Bereich der Siegelnaht. Die hierzu regulär eingesetzten Heizelemente dienen jedoch zur Gewährleistung der einwandfreien Siegelnaht und insbesondere des schadfreien Übergangs zu den unverschweißten Bereichen, um bei jedem Zyklus wiederum abzukühlen. Insbesondere größere Massen der temperierten Heizelemente führen zu einem hohen Energieverbrauch und zu einer Einschränkung hinsichtlich der erforderlichen Zykluszeit.

Zur Reduzierung des Energieverbrauchs wird daher in der Druckschrift DE 197 46 402 A1 vorgeschlagen, die notwendige Schweißwärme durch den Einsatz eines Lasers bei deutlich reduzierter zu temperierender Masse des Heizelements zu erzeugen. Hierzu werden an der zu den Folienabschnitten weisenden Seite der Schweißbacken dünne Begrenzungswandungen eingesetzt, welche direkt mittels Laserdioden beheizt werden. Zur Erwärmung des Heizelements über deren gesamte Breite weist die Schweißbacke einen Längsspalt auf, sodass die Laserstrahlen unmittelbar ohne weitere Hindernisse von der verschiebbaren Laserdiode auf die dünne Begrenzungswandung treffen können. Somit wird eine lokale schnelle Erwärmung der Begrenzungswandung zum Aufschmelzen der überlappenden Folienabschnitte ermöglicht.

Nachteilig bei einer derartigen Ausführungsform ist es jedoch, dass die Schweißbacke aufgrund des sich über die Breite der Schweißbacke erstreckenden Längsspalts und der relativ dünnen die beiden Seiten des Längsspalts verbindenden Begrenzungswandungen relativ instabil ist, und die Herstellung und Handhabung der Schweißbacke aufgrund deren Labilität einen besonders sorgfältigen Umgang erfordert.

Weiterhin ist aus der JP H08-192825 A eine Schweißvorrichtung bekannt, bei der das Heizelement mittels eines Laserstrahls erwärmt wird. Die Notwendigkeit eines Freiraums für den Laserstrahl erübrigt sich in diesem Fall, da die Schweißbacke außerhalb des Wirkungsbereichs geschwenkt und dort mit dem Laserstrahl beheizt werden kann. Von Nachteil ist jedoch der erforderliche Schwenkmechanismus für die Schweißbacke.

Aufgabe der vorliegenden Erfindung ist es daher, eine Siegelvorrichtung zur Verfügung zu stellen, welche mittels Laserstrahlen beheizt werden kann, jedoch die Nachteile der bekannten Ausführungsform vermeidet.

Die gestellte Aufgabe wird durch eine erfindungsgemäße Ausführungsform nach der Lehre des Anspruchs 1 gelöst.

Vorteilhafte Ausführungsformen der Erfindung sind Gegenstand der Unteransprüche.

Die gattungsgemäße Siegelvorrichtung zum Verschweißen zweier überlappender Folienabschnitte umfasst zunächst eine Schweißbacke und einen gegenüberliegenden Widerstand. Das Verschweißen der Folienabschnitte erfolgt bei einer Pressung der Folienabschnitte zwischen der Schweißbacke und dem Widerstand, wozu die Schweißbacke mittels eines Backenantriebs auf den Widerstand zu- und davon wegbewegt werden kann.

Die Schweißbacke weist einen Druckkörper und ein Heizelement auf, wobei das Heizelement auf der zu den Folienabschnitten weisenden Seite am Druckkörper angeordnet ist. Bei Verwendung der Siegelvorrichtung wird die vom Backenantrieb in die Schweißbacke eingeleitete Druckkraft durch den Druckkörper auf das Heizelement übertragen, welches seinerseits eine Pressung des anliegenden zu verschweißenden Folienabschnitts bewirkt. Weiterhin bedarf es zum Verschweißen der Folienabschnitte einer Heizeinrichtung, welche in diesem gattungsgemäßen Fall zumindest eine Laserstrahl emittierende Laserquelle und das Heizelement umfasst, wobei das Heizelement zur Aufheizung desselben den Laserstrahl absorbieren kann. Nicht erforderlich ist es hierbei, dass das Heizelement die gesamte vom Laserstrahl übermittelte Heizleistung absorbiert, sondern vielmehr gilt es, bei der Realisierung einen hohen Wirkungsgrad zu erzielen, bei dem ein entsprechender Anteil der vom Laserstrahl übermittelten Heizleistung im Heizelement in Wärmeenergie umgesetzt wird.

Durch das Auftreffen des Laserstrahls auf das Heizelement in einem Auftreffpunkt wird das Heizelement an der entsprechenden Stelle erwärmt. Die Ausdehnung des Auftreffpunkts bestimmt sich hierbei anhand der Ausdehnung des Laserstrahls beim Auftreffen auf das Heizelement, wobei sich eine Einflusszone im Bereich um den Auftreffpunkt mit einer Erwärmung des Heizelements hierbei insbesondere nach der Wärmeleitfähigkeit des Heizelements richtet. Im Verhältnis zur Breite des Heizelements wird vom einzelnen Laserstrahl gattungsgemäß jedoch lediglich ein kurzer Bereich um den Auftreffpunkt nennenswert erwärmt. Im Gegensatz zu sonstigen bekannten Siegelvorrichtungen hat der Einsatz des Laser-beheizten Heizelements den Vorteil, dass eine schnelle Temperaturänderung des Heizelements bewirkt werden kann. Weiterhin begrenzt sich die Temperaturänderung im Heizelement gezielt auf den Bereich des Auftreffpunktes, wodurch eine präzise Verschweißung ermöglicht wird.

Weiterhin wird zur Aufheizung des Heizelements bei der Heizeinrichtung eine Mehrzahl von Laserquellen eingesetzt, wobei entsprechend eine Mehrzahl Laserstrahlen zu mehreren Auftreffpunkten am Heizelement führen. Hierbei werden die Auftreffpunkte über die Breite des Heizelements verteilt angeordnet. Das heißt, dass die Laserquellen und/oder die Strahlengänge der Laserstrahlen derart ausgerichtet werden, dass sich die entstehenden Auftreffpunkte über die Breite des Heizelements verteilen.

Bei dieser Ausführungsform und Einsatz einer Mehrzahl von Laserquellen mit mehreren erzeugten Auftreffpunkten entstehen hierbei zwar mehrere Strahlengänge, jedoch verbleiben im Gegensatz zur bekannten Ausführung mit nur einem Laser Bereiche innerhalb des Druckkörpers, welche nicht von einem Strahlengang durchbrochen werden müssen, sodass entsprechend der Druckkörper an dieser Stelle nicht zur Führung des Laserstrahls geschwächt werden muss. Somit wird unabhängig von der konkreten Ausführung des Druckkörpers und des Heizelements eine verbesserte Stabilität des Druckkörpers ermöglicht.

Besonderer Vorteil bei Einsatz mehrerer Laserquellen ist es weiterhin, dass die Aufheizung des Heizelements an mehreren Stellen zugleich erfolgen kann, und nicht durch einen über die Breite des Heizelements bewegten Laserstrahl erfolgen muss. Weiterhin reduziert sich hierdurch die erforderliche Leistung der einzelnen Laserquelle durch den Einsatz der mehreren Laserquellen. Hierbei ist es zunächst unerheblich, ob die Laserquellen zugleich oder gepulst oder sequenziell betrieben werden.

Zur Gewährleistung der geforderten Siegelnaht ist es unproblematisch, wenn das Heizelement unabhängig vom Schweißprozess - auch bei Anlage an den überlappenden Folienabschnitten - eine gegenüber der Umgebung erhöhte Temperatur aufweist, sofern sichergestellt ist, dass diese Temperatur hinreichend unterhalb der Schmelztemperatur der zu verschweißenden Folienabschnitte liegt.

Erfindungsgemäß ist daher vorgesehen, dass das Heizelement um ein elektrisches Widerstandsheizelement erweitert oder selber als elektrisches Widerstandsheizelement ausgeführt wird. Hierbei kann das Heizelement mittels des Widerstandsheizelements auf eine erhöhte Grundtemperatur zwischen Raumtemperatur und einer kritischen Schmelztemperatur der überlappenden Folienabschnitte erwärmt werden.

Besonders vorteilhaft ist es, wenn das Heizelement mittels des Widerstandsheizelements auf circa die halbe Schweißtemperatur (ausgehend von 0 °C) beziehungsweise bis nahe der zulässigen regulären Verwendungstemperatur erwärmt werden kann. Beispielsweise kann mittels Widerstandsheizelement eine Erwärmung auf circa 60 °C bei einer zulässigen Verwendungstemperatur von 70 °C und einer Schweißtemperatur von 120 °C erfolgen. Die zum Verschweißen erforderliche Temperatur des Heizelements wird im Folgenden von den Laserstrahlen am jeweiligen Auftreffpunkt erzeugt.

Besonders vorteilhaft ist es, wenn die Auftreffpunkte feststehend angeordnet sind. Dieses vereinfacht deutlich die Gestaltung des Druckkörpers hinsichtlich der zu berücksichtigenden Strahlengänge der Laserstrahlen. Ebenso können gegebenenfalls erforderliche Mittel zur Beeinflussung des Laserstrahls vereinfachend feststehend angeordnet werden. Ebenso bedarf es nicht notwendigerweise keiner Veränderung der Position der Laserquellen und/oder gegebenenfalls vorhandener Lichtleiter.

Bei der Ansteuerung der Laserquellen ist es hierbei besonders vorteilhaft, wenn nur diejenigen Laserquellen zum Einsatz kommen, dessen Auftreffpunkte im Bereich der zu verschweißenden überlappenden Folienabschnitte liegen. Folglich können über die überlappenden Folienabschnitte hinausgehende Bereiche des Heizelements unbeheizt bleiben. Dieses reduziert den Energieverbrauch im Gegensatz zu einer üblichen Beheizung des gesamten Heizelement als auch die Schweißqualität im Randbereich verbessert wird, da somit ein überschüssiger Energieeintrag in die Schweißzone am Rand der überlappenden Folienabschnitte vermieden wird.

Bei einer vorteilhaften Siegeleinrichtung wird das Widerstandselement gleichfalls wie die Schweißbacke gegenläufig auf die Schweißbacke zu- und davon wegbewegt. Besonders vorteilhaft ist es jedoch, wenn die Siegelvorrichtung zwei gegenläufig aufeinander zu- und voneinander wegbewegbare Schweißbacken umfasst, welche jeweils zumindest ein erwärmbares Heizelement aufweisen. Hierbei ist es des Weiteren besonders vorteilhaft, wenn die Heizelemente der beiden sich gegenüberliegenden Schweißbacken mittels Laserstrahlen beheizt werden können und hierzu jeweils mehrere Laserstrahlen eingesetzt werden, deren Auftreffpunkte über die Breite des Heizelements verteilt sind.

Zur Reduzierung des Energieverbrauchs und insbesondere zur Verbesserung des Schweißprozesses mit einer Aufheizung und Abkühlung des Heizelements ist es vorteilhaft, wenn die Wärmeleitfähigkeit des Druckkörpers zumindest um den Faktor 2 geringer ist als die Wärmeleitfähigkeit des Heizelements. Dieses führt zur vorteilhaften Verteilung der Wärmeenergie im Heizelement, während hingegen der Druckkörper nur untergeordnet erwärmt wird. Besonders vorteilhaft ist es jedoch, wenn die Wärmeleitfähigkeit des Druckkörpers zumindest um den Faktor 5 oder noch vorteilhafter um den Faktor 10 geringer ist als die Wärmeleitfähigkeit des Heizelements. Hierdurch wird im Wesentlichen sichergestellt, dass beim Aufheizen des Heizelements durch die für den Druckkörper transparenten Laserstrahlen lediglich das Heizelement der Temperaturänderung unterliegt, während hingegen der Druckkörper hiervon weitgehend unbeeinflusst ist. Somit bedarf es keiner Temperierung unnötiger Werkzeugmassen, sodass der Energieverbrauch gesenkt und der Schweißprozess verbessert werden kann. In bekannter Ausführung aus dem Stand der Technik unter Verwendung eines durch Längsspalt geteilten Werkzeugs bewirkt die Aufheizung der dünnen Verbindungsstelle unvermindert eine Temperierung der beidseitigen hohen Werkzeugmassen mit hoher Wärmeleitfähigkeit, wodurch es zu einem unnötigen Energieverlust kommt.

Bei Einsatz mehrerer Laserquellen ist es weiterhin besonders vorteilhaft, wenn der Auftreffpunkt in einer Vertiefung am Heizelement angeordnet ist. Durch die vorteilhafte Gestaltung der Vertiefung sowie einer möglichen Änderung der Oberflächenbeschaffenheit in der Vertiefung kann die Absorption der vom Laserstrahl übertragenen Energie deutlich verbessert werden. Erforderlich ist es hierzu, dass der Durchmesser der Vertiefung zumindest dem einfachen Durchmesser des Auftreffpunktes entspricht, d.h. das der Auftreffpunkt vollständig in der Vertiefung liegt. Zur vorteilhaften Erwärmung des Heizelements über der Höhe des Heizelements (senkecht zur Breite des Heizelements) und insbesondere zur Erhitzung des Heizelements im Bereich zwischen zwei Auftreffpunkten ist es weiterhin besonders vorteilhaft, wenn der Durchmesser der Vertiefung nicht größer ist als der doppelte Durchmesser des Auftreffpunktes. In Umkehrung führt dieses zu einer Auslegung des Auftreffpunktes (und somit des Strahlengangs des Laserstrahls) auf einen Durchmesser, welcher höchsten dem Durchmesser der Vertiefung entspricht, aber zumindest den halben Durchmesser der Vertiefung erreicht.

In Abhängigkeit von der Formgebung des Heizelements ist es weiterhin besonders vorteilhaft, wenn die über die Breite des Heizelements verteilten Auftreffpunkte entlang einer Kurve angeordnet sind. Hierbei sind die Auftreffpunkte auf der Kurve in jeweils gleichen Abständen zueinander anzuordnen, sodass eine gleichmäßige Erhitzung des Heizelements über die Breite des Heizelements gewährleistet werden kann. Hierbei ist es weiterhin besonders vorteilhaft, wenn die Auftreffpunkte in zumindest zwei Reihen angeordnet werden. Hierdurch wird die Verteilung der eingebrachten Wärmeenergie auf das Heizelement nochmals verbessert. Bei einem sich gerade erstreckendem Heizelement ist es vorteilhaft, wenn die Auftreffpunkte auf einer geraden Linie bzw. auf geraden Linien in gleichen Abständen zueinander angeordnet sind.

Zur Verteilung der vom Laserstrahl in das Heizelement eingebrachten Wärmeenergie ohne Schädigung des Heizelements ist es weiterhin besonders vorteilhaft, wenn im Strahlengang des jeweiligen Laserstrahls eine Streulinse und/oder eine Blende angeordnet ist, wodurch der Laserstrahl aufgeweitet wird. Somit wird es vermieden, dass eine punktförmige Erhitzung des Heizelements am Auftreffpunkt insbesondere bei feststehendem Laserstrahl zu einer Schädigung des Heizelementes führt.

Die Funktion einer Streulinse kann hierbei sowohl mittel einer Anordnung einer separaten Linse im Strahlengang als auch durch eine gewölbte Oberfläche am Ausgang der Lichtquelle bzw. am Ausgang eines Lichtleiters realisiert werden. Wesentlich ist, dass durch den Einsatz entsprechender optischer Maßnahmen der Laserstrahl aufgeweitet wird, sodass sich der Auftreffpunkt vom Durchmesser des regulären Laserstrahls aufweitet auf beispielsweise 2/3 der Höhe des Heizelements. Somit wird durch den aufgeweiteten Auftreffpunkt eine bessere und gleichmäßigere Einleitung der Wärme in das Heizelement ermöglicht.

Bei der Verwendung der Siegelvorrichtung insbesondere zum Verschweißen von überlappenden Folienabschnitten bei der Herstellung von Schlauchbeuteln ist es besonders vorteilhaft, wenn die Schweißbacke zumindest ein oberes Heizelement und ein beabstandetes unteres Heizelement umfasst. Hierbei sind bei sowohl oberem Heizelement als auch unterem Heizelement jeweils eine Mehrzahl von Auftreffpunkten von zugehörigen Laserquellen und Laserstrahlen vorzusehen. Sofern oberes und unteres Heizelement gleiche Höhe aufweisen - wobei davon ausgegangen wird, dass die Breite in aller Regel ebenso gleich ist - kann die Anordnung der Auftreffpunkte übereinstimmend vorgenommen werden, d.h. beispielsweise können Gleichteile für oberes und unteres Heizelement verwendet werden.

Zur Verhinderung der Aufheizung des Druckkörpers weist dieser in vorteilhafter Weise eine Kühleinrichtung auf, wobei in besonders vorteilhafter Weise hierzu Kühlmittelkanäle im Druckkörper eingebracht sind. In einfachster Ausführungsform sind die Fluid führenden Kühlmittelkanäle lediglich als Lüftungskanäle ausgebildet. Weiterhin ist es möglich, den Druckkörper mit Kühlrippen zu versehen, so dass eine verbesserte Wärmeabgabe an die Umgebung ermöglicht wird.

Die Anordnung der für die Auftreffpunkte erforderlichen Laserquellen kann auf vielfältige Art erfolgen. Hierzu stehen zunächst einmal zwei grundsätzlich verschiedene vorteilhafte Konzepte zur Verfügung, wobei in einer ersten vorteilhaften Ausführungsform die Laserquellen auf der von den Folienabschnitten abgewandten Seite des Druckkörpers bzw. der Schweißbacke angeordnet sind. Somit kann ein besonders einfacher Strahlengang bzw. Verlauf des Laserstrahls realisiert werden. Hierbei verlaufen die Strahlengänge von den Laserquellen bis zu den Auftreffpunkten in besonders vorteilhafter Weise linear. Unberücksichtigt bleibt hierbei eine vorteilhafte Aufweitung des Laserstrahls durch eine Streulinse bzw. Blende. Zumindest erfordert diese Ausführungsform keine Umlenkung des Laserstrahls, sondern dieser kann die Laserquelle verlassend direkt auf geradem Wege zum Auftreffpunkt geführt werden. Naheliegend bedarf es entsprechend der analogen Anordnung der Laserquellen in Übereinstimmung mit der Anordnung der Auftreffpunkte.

In alternativer Ausführungsform wird zwischen jeder Laserquelle und dem Auftreffpunkt ein die Laserquelle verlassender Lichtleiter eingesetzt. Hierbei führt der Lichtleiter den Laserstrahl von der Laserquelle in die Schweißbacke. Im Regelfall nimmt hierbei der Lichtleiter einen gebogen Verlauf an. Dieses ermöglicht die Positionierung der Laserquellen unabhängig von der Anordnung der Auftreffpunkte. Dies ist insbesondere in den Fällen relevant, wenn der Abstand der Auftreffpunkte zueinander geringer ist als der erforderliche Platzbedarf aufgrund der Baugröße der Laserquellen. Die Laserquellen können unabhängig von der Schweißbacke sowohl unterhalb als auch darüber als auch hinter der Schweißbacke positioniert werden. Somit wird in besonders vorteilhafter Weise unabhängig von der Baugröße der Laserquellen eine dichte Anordnung von Auftreffpunkten ermöglicht.

Hinsichtlich der Realisierung des Druckkörpers unter Verhinderung der bekannten Nachteile bezüglich der Schwächung des Druckkörpers zur Führung der Laserstrahlen wird in einer vorteilhaften Ausführungsform der Druckkörper mit mehreren Aussparungen versehen, innerhalb derer jeweils die Strahlengänge der Laserstrahlen angeordnet sind. Folglich sind zwischen den einzelnen Aussparungen den Druckkörper stabilisierende Bereiche vorhanden, sodass keine unnötige Schwächung des Druckkörpers über die Breite des Heizelements vorhanden ist.

Hierbei ist es besonders vorteilhaft, wenn die Aussparungen eine zylindrische und/oder konische Form aufweisen, wobei die Aussparungen auf den notwendigen Raumbedarf für die Führung des Laserstrahls reduziert werden können. Zu berücksichtigen ist über den Durchmesser des Laserstrahls bzw. eines nach einer Streulinse oder Blende aufgeweiteten Laserstrahls hinaus ein erweiterter Querschnitt zur Verhinderung einer Überhitzung im Wandungsbereich der Aussparung aufgrund von Streustrahlungen des Laserstrahls bzw. einer Aufheizungen im Strahlengang der Aussparung.

Eine alternative Ausführungsform wird in besonders vorteilhafter Weise ermöglicht, wenn der Druckkörper für die Laserstrahlen transparent ausgeführt ist und entsprechend von den Strahlengängen der Laserstrahlen durchdrungen wird. In diesem Fall sind keine Aussparungen zur Führung der Laserstrahlen erforderlich, sodass der Druckkörper als ein massiver Körper ausgeführt werden kann und folglich eine Schwächung zur Führung der Laserstrahlen, wie im Stand der Technik üblich, unterbleibt.

Wenngleich die feststehende Anordnung der Auftreffpunkte den konstruktiven Aufwand für die Schweißbacke deutlich reduziert kann es vorteilhaft sein, wenn die Auftreffpunkte verstellbar sind. Hierzu ist es möglich, verstellbare Umlenkmittel, beispielsweise Umlenkspiegel und/oder Umlenkprismas, einzusetzen. Ebenso ist es möglich die Laserquellen direkt zu verstellen, so dass der Strahlengang unmittelbar von der Laserquelle bis zum Auftreffpunkt verändert wird. Diese Variante bietet sich besonders an, wenn die Strahlengänge der Laserstrahlen geradlinig von der Laserquelle bis zum Auftreffpunkt verlaufen, d.h. ein übereinstimmendes Raster bei den Auftreffpunkten und den Laserquellen vorhanden ist. Im Falle des Einsatzes von in die Schweißbacke hinein führenden Lichtleitern im Anschluss an die Laserquellen ist es besonders vorteilhaft, wenn die in der Schweißbacke mündenden Enden der Lichtleiter verstellbar sind, wobei aufgrund der Biegbarkeit von Lichtleitern und einem begrenzten Verstellweg die Laserquellen unbeweglich angeordnet werden können.

Zur Anpassung der Schweißbacke an unterschiedliche zu verschweißende überlappende Folienabschnitte wird vielfach ein Tausch der gesamten Schweißbacke vorgenommen. In einem weiten Bereich kann dieses bereits durch die erfindungsgemäße Ausführung entfallen, da die Heizleistung des Heizelements durch eine vorteilhafte Regelung der von den Laserstrahlen übertragenen Energie ohne weiteres an den Erfordernissen anpassbar ist. Hierzu kann sowohl ein intermittierender Betrieb der Laserquellen vorgesehen sein, als auch die Leistung der Laserquellen selber regelbar ausgeführt werden kann.

Ergänzend wird in vorteilhafter Weise das Heizelement austauschbar ausgeführt. Hierbei es möglich, verschieden gestaltete bzw. ausgeführte Heizelemente vorrätig zu halten, so dass eine optimale Anpassung an die zu verschweißenden Folienabschnitte möglich ist. Hierbei kann sowohl die Geometrie auf der zu den Folienabschnitten weisenden Seite unterschiedlich in der Abmessung und der Profilierung gestaltet sein, als auch eine an die individuelle Schweißaufgabe angepasste Oberflächenbeschaffenheit bzw. Oberflächenbeschichtung vorgesehen sein kann.

In den nachfolgenden Figuren wird schematisch eine beispielhafte Ausführungsform für eine erfindungsgemäße Siegelvorrichtung anhand der Schweißbacke mit Heizvorrichtung offenbart.

Es zeigen:
- Fig. 1: eine Schweißbacke einer erfindungsgemäßen Siegelvorrichtung;
- Fig. 2: eine Laserquellenanordnung der Heizeinrichtung zur Fig. 1;
- Fig. 3: ein Heizelement zur Ausführungsform aus Fig. 1;
- Fig. 4: ein schematischer Schnitt durch die Ausführungsform gemäß Fig. 1.

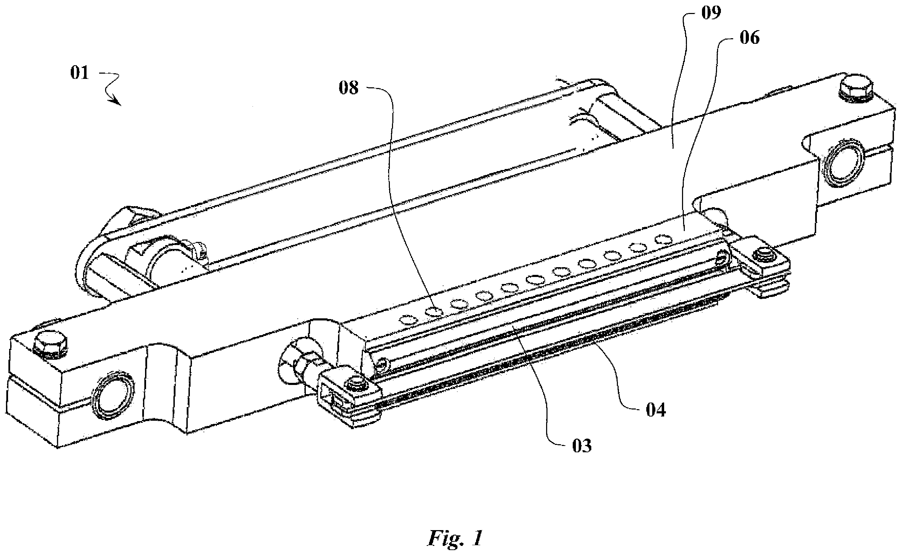

In der **Fig. 1** wird eine beispielhafte Ausführungsform einer Schweißbacke 01 einer entsprechenden erfindungsgemäßen Siegelvorrichtung skizziert. Zu erkennen ist zunächst einmal der übliche Aufbau einer Schweißbacke mit einem Trägerelement 09, an dem 09 das für die vorliegende Erfindung nicht weiter relevante Trennmesser angebracht ist. Am Trägerelement 09 ist auf der zu den Folienabschnitten weisenden Seite der Druckkörper 06 angeordnet, an dem 06 wiederum auf der zu den Folienabschnitten weisenden Seite ein oberes Heizelement 03 und in identischer Ausführung ein unteres Heizelement 04 (teilweise verdeckt vom Trennmesser) angebracht sind. Zur Wärmeabfuhr im Druckkörper 06 weist dieser 06 eine Mehrzahl von Kühlmittelkanälen 08 auf, welche 08 hierbei den Druckkörper 06 senkrecht durchziehen.

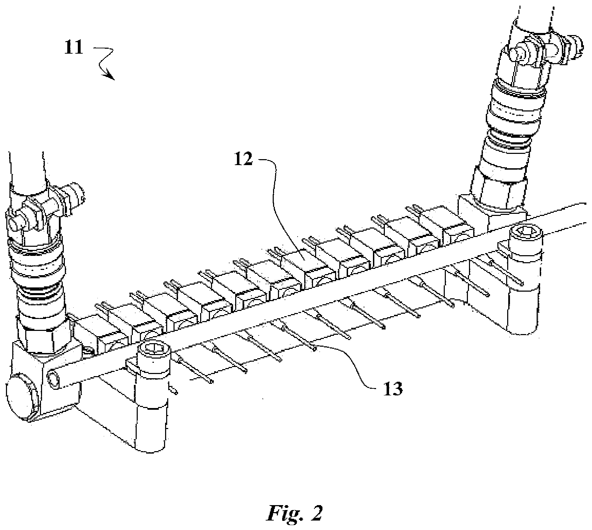

In der **Fig. 2** wird eine beispielhafte Laseranordnung 11 mit einer Mehrzahl von Laserquellen 12 zur Verwendung bei einer Schweißbacke 01 gemäß Fig. 1 skizziert. Die jeweiligen Laserquellen 12 verlassend folgt jeweils ein Lichtleiter 13, welcher 13 sich bis in die Schweißbacke 01 fortsetzt.

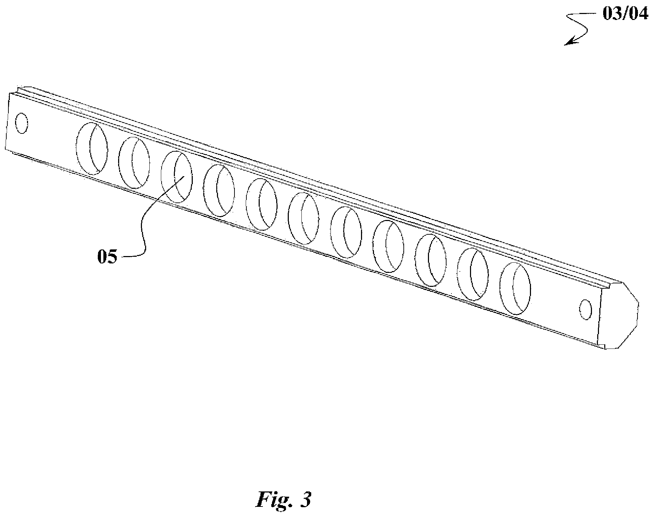

Das obere Heizelement 03 sowie das identische untere Heizelement 04 sind in **Fig. 3** skizziert, wobei nunmehr die in einem Raster angeordneten Vertiefungen 05 erkennbar sind. Die gebildeten Vertiefungen 05 begünstigen hierbei die Absorption der vom Laserstrahl 15 übermittelten Energie, sodass eine effektive Aufheizung des Heizelements 03, 04 am Auftreffpunkt 16 in der Vertiefung 05 ermöglicht wird.

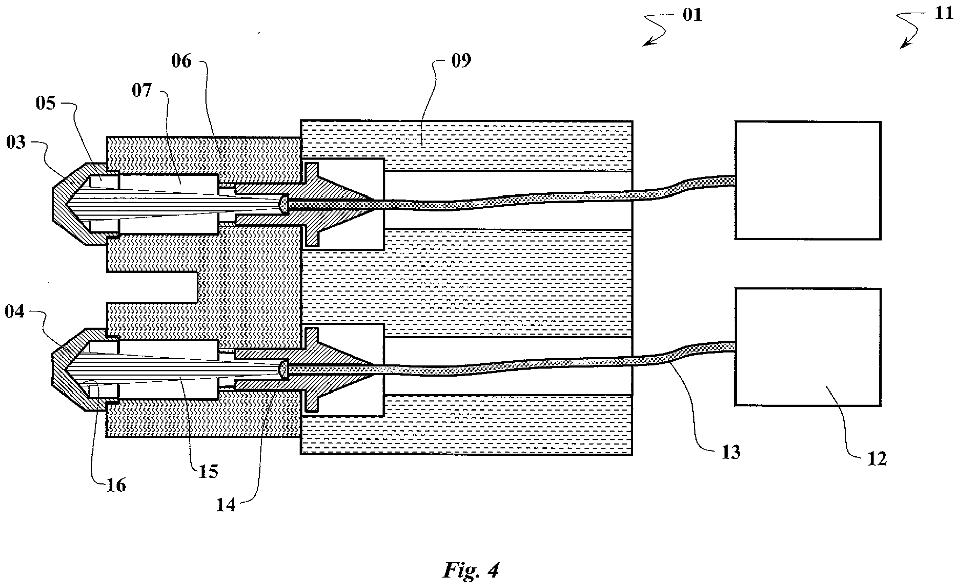

Vorteilhaft zu erkennen ist der für die Erfindung beispielhafte Aufbau in der schematischen Ansicht in **Fig. 4****.** Am Trägerelement 09 befindet sich auf der zu den Folienabschnitten weisenden Seite der Druckkörper 06, an dem 06 wiederum das obere Heizelement 03 sowie das untere Heizelement 04 angebracht sind. Im Trägerelement 09 befinden sich Aussparungen zur Anordnung des Lichtleiters 13 und im Druckkörper 06 befinden in übereinstimmender Position Aussparungen zur Weiterleitung der Laserstrahlen 15 durch den Druckkörper 06 bis zum Auftreffpunkt 16 am Heizelement 03 und 04. Die Auftreffpunkte 16 sind übereinstimmend zu den Vertiefungen 05 angeordnet, wobei der Durchmesser der Vertiefung 05 in diesem Ausführungsbeispiel circa dem 1,5-fachen des Durchmessers des Auftreffpunktes 16 entspricht. Die Aufweitung wird realisiert durch eine am Ende des Lichtleiters 13 angeordnete Streulinse 14. Die Laserquellen 12 sind rückseits der Schweißbacke 01 angeordnet, wobei durch den Einsatz von biegbaren Lichtleitern 13 das Raster zur Anordnung der Laserquellen 12 nicht übereinstimmen muss mit dem Raster der gewählten Vertiefungen 05 und entsprechender Auftreffpunkte 16.

## Patentansprüche

1. Siegelvorrichtung zum Verschweißen zweier überlappender Folienabschnitte mit einer Schweißbacke (01), welche (01) zumindest einen Druckkörper (06) und zumindest ein auf der zu den Folienabschnitten weisenden Seite am Druckkörper (06) angeordnetes Heizelement (03, 04) umfasst, und mit einem Widerstand, wobei die Schweißbacke (01) mittels eines Backenantriebs unter Pressung der Folienabschnitte auf den Widerstand zu und davon weg bewegt werden kann, und mit einer Heizeinrichtung, welche zumindest eine Laserstahl (15) emittierende Laserquelle (12) und das Heizelement (03, 04) umfasst, wobei das Heizelement (03, 04) den Laserstrahl (15) absorbieren kann und hierdurch in einem Auftreffpunkt (16) erwärmt werden kann, wobei die Heizeinrichtung eine Mehrzahl Laserquellen (12) umfasst, wobei die Auftreffpunkte (16) der jeweiligen Laserstrahlen (15) auf das Heizelement (03, 04) über die Breite des Heizelements (03, 04) verteilt angeordnet sind,
**dadurch gekennzeichnet,**
**dass** das Heizelement (03, 04) ein elektrisches Widerstandsheizelement umfasst oder bildet, wobei das Heizelement (03, 04) mittels dem Widerstandsheizelement auf eine erhöhte Grundtemperatur zwischen Raumtemperatur und einer kritischen Schmelztemperatur der überlappenden Folienabschnitte erwärmt werden kann, wobei mittels der Laserstrahlen das Heizelement am jeweiligen Auftreffpunkt von der Grundtemperatur auf die zum Verschweißen erforderliche Temperatur erwärmt werden kann.

2. Siegelvorrichtung nach Anspruch 1,
**dadurch gekennzeichnet,**
**dass** das Widerstandselement gegenläufig auf die Schweißbacke (01) zu und davon weg bewegt werden kann und/oder dass die Siegelvorrichtung zwei gegenläufig aufeinander zu und voneinander weg bewegbare Schweißbacken (01) umfasst, welche (01) jeweils zumindest ein erwärmbares Heizelement (03, 04) umfassen.

3. Siegelvorrichtung nach Anspruch 1 oder 2,
**dadurch gekennzeichnet,**
**dass** die Wärmeleitfähigkeit des Heizelements (03, 04) zumindest um den Faktor 2 höher ist als die Wärmeleitfähigkeit des Druckkörpers (06).

4. Siegelvorrichtung nach einem der Ansprüche 1 bis 3,
**dadurch gekennzeichnet,**
**dass** das Heizelement (03, 04) an jedem Auftreffpunkt eine Vertiefung (05) aufweist, wobei der Durchmesser der Vertiefung (05) zumindest dem einfachen Durchmesser und höchstens dem doppelten Durchmesser des Auftreffpunkts (16) entspricht.

5. Siegelvorrichtung nach einem der Ansprüche 1 bis 4,
**dadurch gekennzeichnet,**
**dass** die Auftreffpunkte (16) entlang zumindest einer Kurve, insbesondere entlang einer oder paralleler Linien, in jeweils gleichen Abständen zueinander angeordnet sind.

6. Siegelvorrichtung nach einem der Ansprüche 1 bis 5,
**dadurch gekennzeichnet,**
**dass** im Strahlengang des jeweiligen Laserstrahls (15) eine Streulinse und/oder eine Blende angeordnet ist, wodurch der Laserstrahl (15) aufgeweitet wird.

7. Siegelvorrichtung nach einem der Ansprüche 1 bis 6,
**dadurch gekennzeichnet,**
**dass** die Schweißbacke (01) zumindest ein oberes Heizelement (03) und ein beabstandetes unteres Heizelement (04) umfasst, welche (03, 04) jeweils eine über die Breite verteilte Anordnung von Auftreffpunkten (16) aufweisen.

8. Siegelvorrichtung nach einem der Ansprüche 1 bis 7,
**dadurch gekennzeichnet,**
**dass** der Druckkörper (06) eine Kühleinrichtung, insbesondere Fluidführende Kühlmittelkanäle (08) und/oder Kühlrippen, umfasst.

9. Siegelvorrichtung nach einem der Ansprüche 1 bis 8,
**dadurch gekennzeichnet,**
**dass** die Laserquellen (12) auf der von den Folienabschnitten abgewandten Seite der Schweißbacke (01) angeordnet sind.

10. Siegelvorrichtung nach einem der Ansprüche 1 bis 8,
**dadurch gekennzeichnet,**
**dass** von jeder Laserquelle (12) ein den Laserstrahl (15) führender zumindest abschnittsweise gebogener Lichtleiter (13) in die Schweißbacke (01) führt.

11. Siegelvorrichtung nach einem der Ansprüche 1 bis 10,
**dadurch gekennzeichnet,**
**dass** der Druckkörper (06) mehrere, insbesondere zylindrische und/oder konische, Aussparungen (07) aufweist, innerhalb deren (07) die Strahlengänge der Laserstrahlen (15) angeordnet sind.

12. Siegelvorrichtung nach einem der Ansprüche 1 bis 10,
**dadurch gekennzeichnet,**
**dass** der Druckkörper (06) für die Laserstrahlen (15) transparent ist und von den Strahlengängen der Laserstrahlen (15) durchdrungen wird.

13. Siegelvorrichtung nach einem der Ansprüche 1 bis 12,
**dadurch gekennzeichnet,**
**dass** die entlang einer Linie angeordneten Auftreffpunkte (16), insbesondere zugleich, mittels Verstellung der zugehörigen Laserquellen (12) und/oder Lichtleiter (13) und/oder im Strahlengang angeordnete Umlenkmittel verstellbar sind.

14. Siegelvorrichtung nach einem der Ansprüche 1 bis 13,
**dadurch gekennzeichnet,**
**dass** die von den Laserquellen (12) abgegebene Energie regelbar ist.

15. Siegelvorrichtung nach einem der Ansprüche 1 bis 14,
**dadurch gekennzeichnet,**
**dass** das Heizelement (03, 04) auswechselbar am Druckkörper (6) angeordnet ist, wobei Heizelemente (03, 04) mit unterschiedlicher Geometrie und/oder Oberflächenbeschaffenheit bezüglich der zu den Folienabschnitten weisenden Seite vorgesehen sind.

## Claims

1. A seal device for welding two overlapping film sections to a welding jaw (01) which (01) comprises at least one pressure body (06) and at least one heating element (03, 04), which is arranged on the pressure body (06) on the side facing the film sections, and a resistance, said welding jaw (01) being able to be moved towards and away from the resistance by means of a jaw drive while pressing the film sections, and a heating device, which comprises at least one laser source (12) emitting laser beams (15) and the heating element (03, 04), said heating element (03, 04) being able to absorb the laser beam (15) and thus being able to be heated in a point of impact (16), said heating device comprising a plurality of laser sources (12), said points of impact (16) of the respective laser beam (15) being distributed on the heating element (03, 04) across the width of said heating element (03, 04),
**characterized in that**
the heating element (03, 04) comprises or forms an electric resistance heating element, said heating element (03, 04) being able to be heated to an elevated basic temperature between room temperature and a critical melting temperature of the overlapping film sections by means of the resistance heating element, said heating element being able to be heated at the corresponding point of impact from the basic temperature to the temperature required for welding by means of the laser beams.

2. The seal device according to claim 1,
**characterized in that**
the resistance heating element can be inversely moved towards and away from the welding jaw (01) and/or
the seal device comprises two welding jaws (01) which (01) can be inversely moved towards and away from each other and which (01) each comprise at least one heatable heating element (03, 04).

3. The seal device according to claim 1 or 2,
**characterized in that**
the thermal conductivity of the heating element (03, 04) is at least twice as large as the thermal conductivity of the pressure body (06).

4. The seal device according to any one of the claims 1 to 3,
**characterized in that**
the heating element (03, 04) comprises an indentation (05) at each point of impact, the diameter of the indentation (05) corresponding at least to once the diameter and at most to double the diameter of the point of impact (16).

5. The seal device according to any one of the claims 1 to 4,
**characterized in that**
the points of impact (16) are each arranged in equal distances to each other along at least one curve, in particular along one or parallel lines.

6. The seal device according to any one of the claims 1 to 5,
**characterized in that**
a diffusion lens and/or a shutter is arranged in the beam path of the corresponding laser beam (15) whereby the laser beam (15) is widened.

7. The seal device according to any one of the claims 1 to 6,
**characterized in that**
the welding jaw (01) comprises at least one upper heating element (03) and a distanced lower heating element (04), which (03, 04) each comprise an arrangement of points of impact (16) distributed over the width.

8. The seal device according to any one of the claims 1 to 7,
**characterized in that**
the pressure body (06) comprises a cooling device, in particular coolant channels (08) carrying fluids and/or cooling ribs.

9. The seal device according to any one of the claims 1 to 8,
**characterized in that**
the laser sources (12) are arranged on the side of the welding jaw (01) facing away from the film sections.

10. The seal device according to any one of the claims 1 to 8,
**characterized in that**
an optical fiber (13) bent at least in sections and guiding the laser beam (15) is guided into the welding jaw (01) by each laser source (12).

11. The seal device according to any one of the claims 1 to 10,
**characterized in that**
the pressure body (06) comprises several, in particular cylindrical and/or tapered, recesses (07) within which (07)the beam paths of the laser beams (15) are arranged.

12. The seal device according to any one of the claims 1 to 10,
**characterized in that**
the pressure body (06) is transparent for the laser beams (15) and is penetrated by the beam paths of the laser beam (15).

13. The seal device according to any one of the claims 1 to 12,
**characterized in that**
the points of impact (16) arranged along a line can be displaced, in particular simultaneously, by displacing the corresponding laser sources (12) and/or optical fibers (13) and/or deflections means arranged in the beam path.

14. The seal device according to any one of the claims 1 to 13,
**characterized in that**
the energy emitted by the laser sources (12) can be controlled.

15. The seal device according to any one of the claims 1 to 14,
**characterized in that**
the heating element (03, 04) is arranged on the pressure body (06) so as to be exchangeable, said heating element (03, 04) being provided with different geometries and/or surface characteristics regarding the side facing the film sections.

## Revendications

1. Dispositif de scellement pour souder deux zones de film se superposant ayant une mâchoire (01) de soudage, qui (01) comprend au moins un corps (06) de pressure et au moins un élément (03, 04) de chauffage disposé au corps (06) de pressage au côté tournant vers les zones de film, et ayant une résistance, ladite mâchoire (01) de soudage pouvant être bougé vers et loin de la résistance au moyen d'un entraînement de mâchoire en pressant les zones de film, et ayant un dispositif de chauffage, qui comprend au moins une source (12) de laser émettant des rayons (15) de laser et l'élément (03, 04) de chauffage, ledit élément (03, 04) pouvant absorber le rayon (15) de laser et ainsi pouvant être chauffé dans un point (16) d'impact, lesdits points (16) d'impact des rayons (15) de laser correspondants étant distribués sur l'élément (03, 04) de chauffage au travers de la largeur de l'élément (03, 04) de chauffage,
**caractérisé en ce que**
l'élément (03, 04) de chauffage comprend ou forme un élément de chauffage de résistance, ledit élément (03, 04) de chauffage pouvant être chauffé jusqu'une température de référence élevée entre une température ambiante et une température de fusion cruciale des zones de film superposant au moyen de l'élément de chauffage de résistance, ledit élément de chauffage pouvant être chauffé au point d'impact correspondant de la température de référence jusqu'à la température nécessaire pour le soudage au moyen des rayons de laser.

2. Dispositif de scellement selon la revendication 1,
**caractérisé en ce que**
l'élément de résistance peut être bougé inversement vers et loin de la mâchoire (01) de soudage et/ou
ledit dispositif de scellement comprend deux mâchoires (01) de soudage se bougeant vers et loin des uns aux autres, lesdites mâchoire (01) de soudage comprenant respectivement au moins un élément (03, 04) de chauffage chauffable.

3. Dispositif de scellement selon la revendication 1 ou 2,
**caractérisé en ce que**
la conductivité thermique de l'élément (03, 04) de chauffage est au moins deux fois plus que la conductivité thermique du corps (06) de pressage.

4. Dispositif de scellement selon l'une quelconque des revendications 1 à 3,
**caractérisé en ce que**
l'élément (03, 04) de chauffage comprend une indentation (05) au chaque point d'impact, le diamètre de l'indentation (05) correspondant au moins à une fois le diamètre simple et au plus à deux fois le diamètre du point (16) d'impact.

5. Dispositif de scellement selon l'une quelconque des revendications 1 à 4,
**caractérisé en ce que**
les points (16) d'impact sont disposés dans des intervalles égaux entre eux le long au moins d'une courbure, en particulier le long une ligne ou des lignes parallèles.

6. Dispositif de scellement selon l'une quelconque des revendications 1 à 5,
**caractérisé en ce qu'**
une lentille divergente et/ou un obturateur est disposé(e)/sont disposés dans une trajectoire de rayon du rayon (15) de laser correspondant par quoi le rayon (15) de laser est élargi.

7. Dispositif de scellement selon l'une quelconque des revendications 1 à 6,
**caractérisé en ce que**
la mâchoire (01) de soudage comprend au moins un élément (03) de chauffage supérieur et un élément (04) de chauffage inférieur espacé, qui (03, 04) respectivement comprennent un ensemble des points (16) d'impact distribués au travers de la largeur.

8. Dispositif de scellement selon l'une quelconque des revendications 1 à 7,
**caractérisé en ce que**
le corps (06) de pressure comprend un dispositif de refroidissement, en particulier des canaux (08) d'agent réfrigérant et/ou des ailettes de refroidissement.

9. Dispositif de scellement selon l'une quelconque des revendications 1 à 8,
**caractérisé en ce que**
les sources (12) de laser sont disposées sur le côté de la mâchoire (01) de soudage détournant des zones de film.

10. Dispositif de scellement selon l'une quelconque des revendications 1 à 8,
**caractérisé en ce qu'**
un fibre optique courbé au moins en sections et guidant le rayon (15) de laser passe dans la mâchoire (01) de soudage de chaque source (12) de laser.

11. Dispositif de scellement selon l'une quelconque des revendications 1 à 10,
**caractérisé en ce que**
le corps (06) de pressure comprend plusieurs évidements (07), en particulier cylindriques et/ou coniques, dans lesquels (07) les trajectoires de rayon des rayons (15) de laser sont disposées.

12. Dispositif de scellement selon l'une quelconque des revendications 1 à 10,
**caractérisé en ce que**
le corps (06) de pressure est transparent pour les rayons (15) de laser et est pénétré par les trajectoires de rayon des rayons (15) de laser.

13. Dispositif de scellement selon l'une quelconque des revendications 1 à 12,
**caractérisé en ce que**
les points (16) d'impact disposés le long d'une ligne peuvent être déplacés, en particulier simultanément, au moyen d'une déplacement des sources (12) de laser respectives et/ou des fibres (13) optiques et/ou des moyens de déviation disposés dans la trajectoire de rayon.

14. Dispositif de scellement selon l'une quelconque des revendications 1 à 13,
**caractérisé en ce que**
l'énergie libérée des sources (12) de laser peut être contrôlée.

15. Dispositif de scellement selon l'une quelconque des revendications 1 à 14,
**caractérisé en ce que**
l'élément (03, 04) de chauffage est disposé au corps (06) de pressure de manière échangeable, ledit élément (03, 04) de chauffage étant pourvu d'une géométrie variable et/ou un état de surface en regard du côté tourné vers les zones de film.
